# FASCICULE DE BREVET EUROPEEN

(11) **EP 3 414 883 B1**
(45) Date de publication et mention de la délivrance du brevet: **06.11.2019**
(21) Numéro de dépôt: 17707637.9
(22) Date de dépôt: 06.02.2017
(51) Int. Cl.: H04L 29/06, H04W 4/00, H04W 12/08

(54) **PROCÉDÉ D'ADMINISTRATION D'UN CANAL DE COMMUNICATION ENTRE DEUX COMPOSANTS HOTES D'UN DISPOSITIF MOBILE NFC**
VERFAHREN ZUR VERWALTUNG EINES KOMMUNIKATIONSKANALS ZWISCHEN ZWEI HOST-KOMPONENTEN EINER MOBILEN NFC-VORRICHTUNG
METHOD FOR ADMINISTERING A COMMUNICATION CHANNEL BETWEEN TWO HOST COMPONENTS OF A MOBILE NFC DEVICE

(30) Priorité: 09.02.2016 FR 1651009
(43) Date de publication de la demande: 19.12.2018
(73) Titulaire: IDEMIA France, 92400 Courbevoie (FR)
(72) Inventeur: DOS SANTOS, Elder, 92700 Colombes (FR); LIEUPART, Damien, 92700 Colombes (FR)
(74) Mandataire: Jacobacci Coralis Harle
(86) Numéro de dépôt international: PCT/FR2017/050269
(87) Numéro de publication internationale: WO 2017/137688

(56) Documents cités:
- EP-A1- 2 846 473
- EP-A1- 2 975 775
- US-A1- 2015 017 909
- "Smart Cards; UICC - Contactless Front-end (CLF) Interface; Host Controller Interface (HCI) (Release 12)", TECHNICAL SPECIFICATION, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. SCP TEC, no. V12.1.0, 31 octobre 2014 (2014-10-31), XP014223302, cité dans la demande

## Description

Le domaine de l'invention concerne un dispositif mobile NFC (pour « Near Field Communication » en anglais) et un procédé d'administration d'un canal de communication à destination d'un premier composant hôte.

L'homme du métier sait qu'un dispositif mobile NFC comprend un circuit intégré NFC à communication radiofréquence sans fil de courte portée, d'environ quelques centimètres, pour opérer des services sécurisés, par exemple d'autorisation d'usage d'un service, de paiement, de transport, etc. Il est prévu que le circuit intégré NFC, appelé également composant CLF pour « contactless frontend » en anglais, communique avec plusieurs composants électroniques situés au sein du dispositif mobile NFC, par exemple, une carte UICC (pour « Universal Integrated Circuit Card » en anglais) ou bien un élément sécurisé embarqué de type eSE (pour « embedded Secure Element » en anglais) ou bien à l'extérieur, par exemple avec un lecteur externe sans contact, ou bien, encore, avec des éléments rajoutés au dispositif mobile NFC, par exemple une carte mémoire additionnelle, pour opérer les services sécurisés. Il est nécessaire de régir les communications entre ces composants électroniques.

Pour cela, l'institut européen des normes de télécommunication, l'ETSI, a prévu la spécification technique ETSI TS 102 622, la dernière version (V12.1.0) étant datée du mois d'octobre 2014. La spécification technique décrit l'interface logique qui autorise l'opérabilité des applications NFC dans un ou plusieurs composants électroniques, appelés composant hôte ou « Host » en anglais, du dispositif mobile NFC. Cette architecture d'interface de contrôle d'hôtes est dénommée « Host Controler Interface » en anglais. Plus précisément, un composant hôte peut être, par exemple un élément sécurisé embarqué de type eSE, une carte SIM (pour « Subscriber Identification Module ») pour s'identifier à un réseau de téléphonie mobile ou un composant de bande de base du dispositif NFC. Il est prévu un contrôleur d'hôtes ou « Host Controller » hébergé dans le composant CLF pour administrer des canaux de communications entre les composants hôtes.

La dite spécification technique de l'ETSI implémente une architecture de communication organisée pour que le contrôleur d'hôtes administre une liste blanche pour chacun des composants hôte. Une liste blanche d'un composant hôte est destinée à identifier les autres composants hôtes qui sont autorisés à créer un canal de communication à sa destination.

Un canal de communication est défini selon la dite spécification technique de l'ETSI comme étant un lien logique entre deux ports logiques de composants hôtes différents pour véhiculer des événements, des commandes et des réponses qui contiennent des données pour l'opération d'un service. Un port, appelé « Gate » en anglais, étant un point d'entrée logique permettant d'accéder aux services proposés par un composant hôte.

En particulier, le protocole de création d'un canal de communication requière l'inscription, par le composant hôte destinataire, d'un composant hôte autorisé, qui est à l'origine de la création du canal, dans la liste blanche du composant hôte destinataire. Si un composant hôte à l'origine d'une requête de création de canal de communication vers un composant hôte destinataire de ce canal de communication n'est pas inscrit dans la liste blanche du composant hôte destinataire, la requête de création du canal de communication est rejetée par le contrôleur d'hôtes.

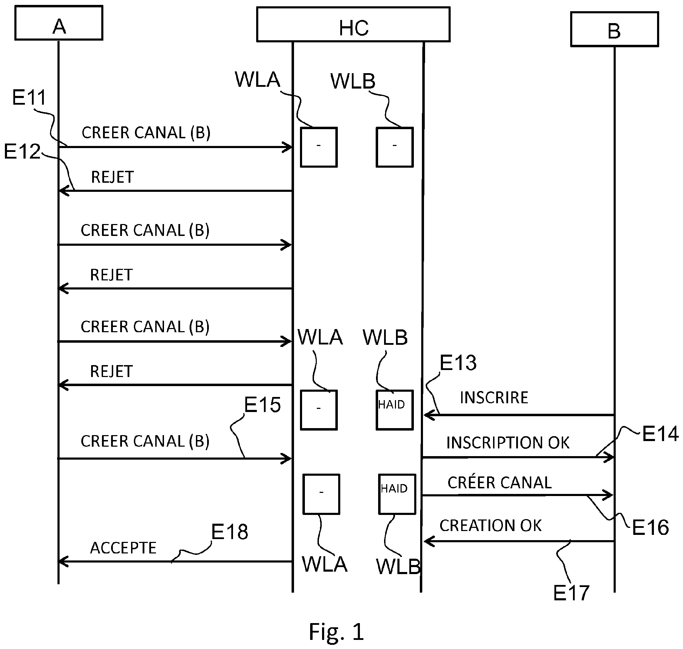

La figure 1 représente une séquence de flux d'un procédé conventionnel tel que défini dans la dite spécification technique de l'ETSI pour l'administration d'un canal de communication entre un composant hôte A et un composant hôte B. Le contrôleur d'hôtes HC administre les listes blanches WLA et WLB de, respectivement, chacun des composants hôtes A et B. En phase initiale, les listes blanches sont vides. A une première étape E11, le composant hôte A émet vers le contrôleur d'hôtes HC une requête de création d'un canal de communication à destination du composant hôte B. La liste blanche WLB de l'hôte B ne contenant pas l'identifiant de l'hôte A, le contrôleur d'hôtes à une étape E12 rejette la requête de création. Dans la situation de la figure 1, les étapes E11 et E12 sont répétées deux fois et aboutissent à de nouveaux rejets. A une étape E13, le composant hôte B met à jour sa liste blanche en inscrivant l'identifiant du composant hôte A, HAID, dans sa liste blanche WLB et ainsi autorisant l'hôte A à pouvoir créer un canal de communication à sa destination. Le contrôleur d'hôtes HC envoie alors, à l'étape E14, une confirmation de la prise en compte de l'inscription du composant hôte A dans la liste blanche WLB du composant hôte B. A une étape E15, une nouvelle tentative de création de canal de communication entre A et B est émise, par le biais d'une nouvelle requête, par le composant hôte A vers le contrôleur d'hôtes HC. Le contrôleur HC vérifie que la liste blanche WLB du composant hôte B contient l'identifiant du composant hôte A et assigne alors un identifiant de canal disponible à la requête de création de canal de communication. A une étape E16, le contrôleur d'hôtes HC notifie le composant hôte B de la requête de création de canal de communication émise par le composant hôte A, ainsi que de l'identifiant de canal choisi. Le composant hôte B retourne au contrôleur d'hôtes HC, à l'étape E17, une confirmation d'acceptation de création du canal de communication avec l'identifiant de canal proposé. A une étape E18, le contrôleur d'hôtes HC notifie le composant hôte A de la création du canal de communication avec le composant hôte B ainsi que de l'identifiant qui lui a été attribué.

Les requêtes de création d'un canal de communication par l'hôte à l'origine de ces tentatives s'initient donc sans que ce dernier ne sache s'il est enregistré, ou pas, dans la liste blanche du composant hôte destinataire. Les multiples tentatives de création d'un canal de communication seront donc rejetées avant l'inscription du composant hôte initiateur dans la liste blanche du composant hôte destinataire. Ceci a pour conséquence de générer inutilement du trafic, d'occuper de la bande passante et des ressources du contrôleur d'hôtes ainsi que de consommer de l'énergie.

Il est recherché d'améliorer le processus d'administration de création d'un canal de communication et de palier les problèmes précités.

Plus précisément, l'invention concerne un procédé d'administration d'un canal de communication à destination d'un premier composant hôte dans un dispositif mobile NFC comprenant également un contrôleur d'hôtes pour administrer au moins une première liste blanche destinée à identifier au moins un deuxième composant hôte ayant un droit de création du canal de communication à destination du premier composant hôte H1. Selon l'invention, le procédé comprend les étapes successives suivantes :
- la mise à jour du droit du deuxième composant dans la première liste blanche par le premier composant hôte,
- la notification de la mise à jour au deuxième composant hôte par le contrôleur d'hôtes.

Selon une variante du procédé, il comprend également une étape de vérification de la notification par le deuxième composant hôte et une étape de contrôle de l'émission d'une requête de création du canal de communication par le deuxième composant hôte en fonction du résultat de la vérification.

Selon une variante du procédé, la mise à jour est une inscription d'un identifiant du deuxième composant hôte dans la première liste blanche et il comprend également une étape de requête de création du canal de communication par le deuxième composant hôte à la suite de l'étape de notification.

Selon une autre variante du procédé, la mise à jour est un effacement d'un identifiant du deuxième composant hôte dans la première liste blanche et il comprend également une étape de requête de suppression du canal de communication par le deuxième composant hôte ou par le contrôleur d'hôtes à la suite de l'étape de notification.

Selon une variante, la notification est un message comprenant au moins un premier paramètre contenant l'identifiant du premier composant hôte.

Selon une autre variante, la notification est un message comprenant également au moins un deuxième paramètre indiquant une action d'inscription ou d'effacement.

De préférence, la notification est configurée pour que le format du message soit conforme à la spécification technique ETSI TS 102 622.

Il est également prévu selon l'invention un dispositif mobile NFC comprenant au moins un premier et un deuxième composant hôte et un contrôleur d'hôtes pour administrer au moins une première liste blanche destinée à identifier au moins le deuxième composant hôte ayant un droit de création d'un canal de communication à destination du premier composant hôte. Selon l'invention, le contrôleur d'hôtes comprend également un moyen pour émettre une notification de mise à jour du droit de création du canal de communication dans la première liste blanche vers au moins le deuxième composant hôte.

Selon une variante du dispositif, le deuxième composant hôte comprend un moyen de vérification de la notification et un moyen pour contrôler l'émission d'une requête de création du canal de communication en fonction du résultat de la vérification.

On notera que le premier composant hôte et le deuxième composant hôte sont chacun un des composants choisis parmi la liste des composants de type circuits intégrés suivants : eSE, UICC, eUICC, élément sécurisé, SIM amovible, processeur du dispositif mobile, carte mémoire SD.

Selon une variante, le contrôleur d'hôtes est hébergé dans un circuit intégré NFC.

De préférence, le contrôleur d'hôtes et le moyen pour émettre la notification de mise à jour sont configurés pour que le format du message de la notification de la mise à jour soit conforme à la spécification technique ETSI TS 102 622.

Il est également prévu selon l'invention, un programme d'ordinateur comprenant des moyens pour l'exécution des étapes du procédé selon l'un quelconque des modes de réalisation précédents lorsque le dit programme est exécuté sur un dispositif mobile NFC.

D'autres caractéristiques et avantages de la présente invention apparaîtront plus clairement à la lecture de la description détaillée qui suit comprenant des modes de réalisation de l'invention donnés à titre d'exemples nullement limitatifs et illustrés par les dessins annexés, dans lesquels :
- la figure 1 représente une séquence de flux déjà décrit dans l'état de la technique pour un procédé d'administration d'un canal de communication entre un composant hôte A et un composant hôte B dans un dispositif mobile NFC ;
- la figure 2 représente un dispositif mobile NFC apte à mettre en œuvre le procédé d'administration selon l'invention ;
- La figure 3 représente un mode de réalisation du procédé d'administration selon l'invention pour la création d'un canal de communication.

L'invention s'applique au dispositif mobile NFC et plus particulièrement au procédé d'administration d'un canal de communication entre deux composants hôte tel qu'il est défini par la spécification technique ETSI TS 102 622. La figure 1 évoquée dans la description de l'état de la technique décrit le procédé d'administration d'un canal de communication entre deux composants hôtes.

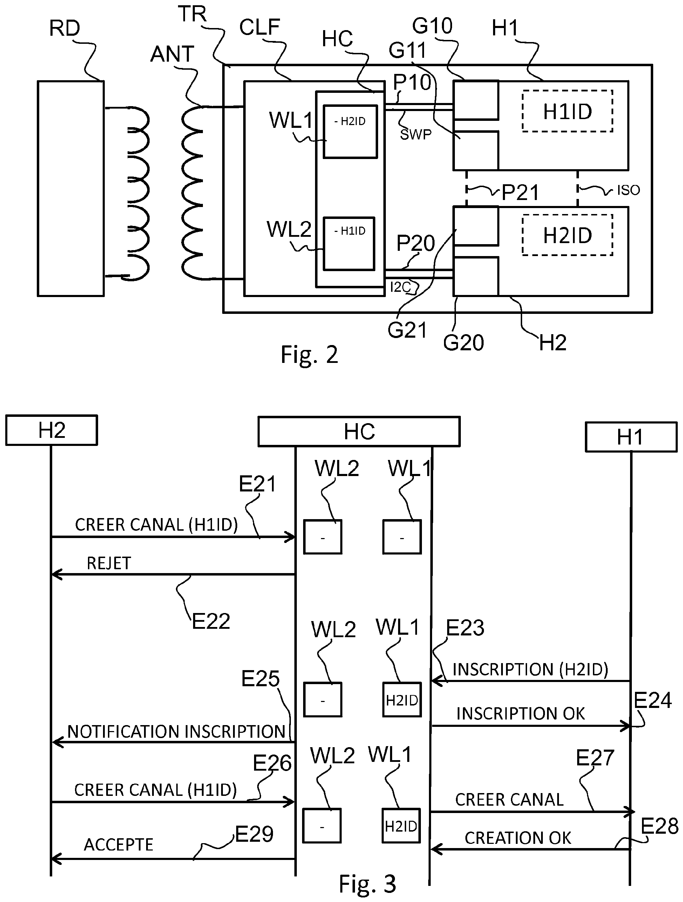

La figure 2 représente un mode de réalisation d'un dispositif mobile NFC référencé TR comprenant au moins deux composants hôtes H1, H2 et un circuit intégré NFC dit « Contactless Front End », désigné par la référence CLF, configuré pour opérer des communications sans contact de courte portée d'environ quelques centimètres, par exemple conforme à la norme ISO/IEC 14443. Le dispositif mobile TR est un téléphone mobile cellulaire, ou selon d'autres variantes est par exemple un dispositif multimédia de type tablette, montre, ordinateur portable ou borne multimédia de service, ou de façon plus générale tout objet électronique dit communicant embarquant un circuit intégré NFC. Le circuit intégré CLF comporte un circuit d'antenne radiofréquence ANT pour l'émission et la réception de données en champs proche. Le circuit d'antenne ANT permet la communication avec un dispositif électronique externe RD compatible avec le circuit intégré CLF, par exemple un lecteur externe de carte NFC.

Dans une configuration représentée en figure 2, le circuit intégré CLF est connecté par une interface filaire à au moins deux composants hôtes, un premier H1 et un deuxième H2, du dispositif mobile TR. Un composant hôte est un composant électronique apte à exécuter des fonctions logiques ou logicielles pour l'opération d'un service. Le circuit intégré CLF comprend également un contrôleur d'hôtes HC en charge notamment de la gestion des communications via des canaux de communications entre les composants hôtes H1, H2 conformément à la spécification technique de l'ETSI TS 102 622. Les composants hôtes H1 et H2 sont identifiés auprès du contrôleur hôte HC par des identifiants H1ID et H2ID respectivement. Les identifiants des composants hôtes sont utilisés lors de la création d'un canal de communication.

Dans cette configuration, le premier composant hôte H1 est un circuit intégré sécurisé, par exemple de type UICC ou eUICC (pour « embedded UICC » en terminologie anglaise), une carte SIM amovible ou carte soudée eSIM (pour « Embedded Subscriber Identification Module » en anglais) ou de type eSE qui est un circuit intégré étanche aux autres composants électroniques à qui l'accès n'est pas autorisé et qui est destiné à protéger des données sensibles pour tout type d'application.

Ainsi, le composant hôte H1 héberge des secrets, par exemple des clés cryptographiques, des algorithmes propriétaires, ou des applications sensibles qu'il est nécessaire de protéger. Il s'agit par exemple de clés d'authentification à un réseau de téléphonie mobile, des clés de chiffrement pour la génération de jetons de paiement, ou des applications bancaires. Le premier composant hôte H1 possède son propre processeur et au moins une mémoire volatile et une mémoire non volatile, ainsi que son système opératif logiciel.

Dans cette configuration, le deuxième composant hôte H2 est, par exemple, le processeur du dispositif mobile TR permettant le fonctionnement du système opératif logiciel du dispositif TR. Ce deuxième composant hôte pourrait tout aussi être, par exemple et de façon non limitative, un autre élément sécurisé de type eSE, UICC, eUICC ou bien encore une carte mémoire de type SD par exemple (pour « Secure Digital » en anglais). Le deuxième composant hôte H2 coopère avec au moins des mémoires volatiles et non volatiles du dispositif mobile TR ainsi que d'autres modules fonctionnels selon la configuration du dispositif (module WIFI, Bluetooth, etc...). Le système opératif logiciel du dispositif TR opère les fonctionnalités de communications du dispositif mobile TR et des applications mobiles logicielles, par exemple une application de type « MIDLET ».

L'interface filaire référencée SWP reliant le premier composant hôte H1 et le circuit intégré CLF est un bus de communication à un fil et opère conformément au protocole SWP pour « Single Wire Protocol » en anglais. L'interface filaire référencée ISO reliant le premier composant hôte H1 et le deuxième composant hôte H2 peut être, par exemple, de type ISO/IEC 7816 ou de type SWP selon le type du circuit intégré sécurisé du premier composant hôte H1. L'interface filaire, référencée I2C, reliant le deuxième composant hôte H2 et le circuit intégré CLF est par exemple une interface de type I2C (« Inter-Integrated Circuit » en anglais) ou SPI (« Serial Peripheral Interface » en anglais).

Le circuit intégré CLF, le premier et le deuxième composant hôte H1 et H2 permettent le fonctionnement du dispositif mobile TR selon au moins quatre modes de service. Le premier mode est un mode lecteur (« reader mode » en terminologie anglaise) dans lequel le premier composant hôte H1 peut échanger avec une carte externe NFC connectée au circuit intégré CLF via une liaison sans fil. Le deuxième mode est un mode carte (« card emulation » en anglais) dans lequel un lecteur externe, connecté via une liaison sans fil au circuit intégré CLF, peut échanger des données avec le premier composant hôte H1. Le troisième mode est un mode dit « connectivité » (« CONNECTIVITY » en anglais) dans lequel le premier composant hôte H1 transmet des commandes au deuxième composant hôte H2 (échanges pouvant être soit monodirectionnels en partance du premier composant hôte H1 vers le deuxième composant hôte H2, sans que ce dernier ne puisse répondre directement aux sollicitations reçues (par exemple dans le cas du réveil sécurisé d'une application MIDLET) ou soit bi-directionnels pour certaines commandes spécifiques). Enfin, le quatrième mode est un mode générique dans lequel le deuxième composant hôte H2 initie une communication avec le premier composant hôte H1 qui sera en capacité de lui répondre. Le lien entre le deuxième composant hôte H2 et le premier composant hôte H1 pouvant utiliser, soit une liaison ISO physique présente entre les deux composants hôte, soit émuler une telle liaison, il s'agit alors d'un mode « émulation d'ISO », bien connu sous le terme « ISO Gate » en anglais, lorsque la liaison filaire n'est pas présente.

On notera que le dispositif mobile TR peut comprendre d'autres composants hôtes identifiés par le contrôleur d'hôtes HC, c'est à dire trois composants hôtes ou plus, sans sortir du cadre de l'invention. Les autres composants hôtes peuvent être par exemple un écran, un clavier, le processeur de bande de base ou un circuit intégré de communication radiofréquence sans fil (WIFI, Bluetooth, etc...), ou une carte amovible de mémoire de type « SD card ». Il est également envisageable que le contrôleur d'hôtes HC administre un canal de communication entre un composant hôte du dispositif TR et un composant hôte externe au dispositif mobile TR, par exemple le lecteur externe RD.

Le contrôleur d'hôtes HC opère les fonctionnalités prévues dans la dite spécification technique de l'ETSI mentionnée ci-avant et en particulier administre les canaux de communication avec et entre les composants hôtes. Un canal de communication peut être statique, c'est à dire permanent, ou dynamique, c'est à dire qu'il peut être créé et effacé. Les composants hôtes H1 et H2 comprennent un ou plusieurs ports logiques (dénommé « Gate » en anglais dans la spécification de l'ETSI) correspondant à un point d'entrée d'un canal de communication. On rappelle qu'un canal de communication permet à un composant hôte l'usage d'un service exécuté par un autre composant hôte.

Dans la configuration décrite en figure 2, le premier composant hôte H1 comprend un port G10 attribué à un canal de communication statique P10 avec le contrôleur d'hôtes HC. Le deuxième composant hôte comprend un port G20 attribué à un canal de communication statique P20 avec le contrôleur d'hôtes HC. Les canaux de communication statiques P10 et P20 sont utilisés pour la transmission de requêtes d'administration et/ou de configuration entre un composant hôte et le contrôleur d'hôtes. Par exemple les requêtes de création ou d'effacement d'un canal de communication, ou tout type d'événement, de commandes, de réponse, de notification de connexion d'un nouveau composant hôte ou d'effacement de canaux de communication transitent via ces canaux de communication statiques.

Le premier composant hôte H1 et le deuxième composant hôte H2 comprennent un port G11 et G21 respectivement pour l'attribution d'un canal de communication P21 dynamique entre les deux composants hôtes H1 et H2. Le canal de communication P21 permet l'échange de messages, c'est-à-dire, au sens logiciel, l'échange d'événements, de commandes et de réponses selon le service concerné. Le procédé d'administration du canal de communication P21 sera décrit par la suite au moyen de la figure 3.

Le contrôleur d'hôtes HC gère au moins une liste blanche WL1 du premier composant hôte H1 et une liste blanche WL2 du deuxième composant hôte H2. Une liste blanche d'un composant hôte est destinée à identifier les autres composants hôtes ayant un droit de création d'un canal de communication à sa destination. On notera que le contrôleur d'hôtes HC gère une liste blanche pour chacun des composants hôtes identifiés auprès de lui, trois listes blanches ou plus dans le cas où le terminal TR comprend trois composants hôte ou plus enregistrés. Une liste blanche enregistre un ou plusieurs identifiants de composants hôtes autorisés. Dans la configuration présentée en figure 2, la liste blanche WL1 du composant hôte 1 contient, par exemple, l'identifiant H2ID du composant hôte H2 autorisé. Dans cette même configuration, la liste blanche WL2, contient, quant à elle, l'identifiant H1ID du composant d'hôte H1 autorisé. Le contrôleur d'hôtes HC est apte à mettre à jour la liste blanche WL1 et la liste blanche WL2 à la suite d'une requête d'inscription ou d'effacement d'un composant hôte autorisé, la requête d'inscription ou d'effacement étant émise par le premier composant hôte H1 ou le deuxième composant hôte H2 chacun dans leur propre liste blanche WL1 et WL2, respectivement, pour le premier composant hôte H1 et pour le deuxième composant hôte H2.

Par ailleurs, dans le cadre de l'opération du procédé d'administration d'un canal de communication selon l'invention, le contrôleur d'hôtes HC comprend un moyen pour émettre une notification de mise à jour d'une liste blanche d'un composant hôte vers un autre composant hôte. Il s'agit de la mise à jour du droit de création du canal de communication dans la liste blanche WL1 ou dans la liste blanche WL2. La notification est émise par le contrôleur d'hôtes HC à destination du composant hôte qui est inscrit ou effacé d'une liste blanche. Le contrôleur d'hôtes HC est une entité logicielle opérant les fonctions pour élaborer la notification de mise à jour et son émission. La notification permet d'informer un composant hôte de son inscription ou de son effacement dans une liste blanche afin que celui-ci émette une requête de création d'un canal de communication ou qu'il mette fin à l'émission d'une requête de création d'un canal de communication. La notification permet, alors, la réduction du trafic d'information inutile.

On notera qu'il est envisageable que le contrôleur d'hôtes HC comprenne un moyen de configuration pour activer ou désactiver l'émission d'une notification de mise à jour d'une liste blanche, par exemple grâce à un registre de configuration du circuit intégré CLF permettant la configuration d'un paramètre pour activer ou désactiver l'émission d'une notification de mise à jour d'une liste blanche. Le paramètre est configurable par le composant hôte qui est ou sera le destinataire d'une notification de mise à jour d'une liste blanche. Réciproquement, il est prévu que les composants hôtes du dispositif mobile TR comprennent un moyen pour émettre une commande d'activation/ désactivation de la notification de mise à jour.

De plus, dans une variante du dispositif mobile TR, le premier et le deuxième composant hôte H1 et H2 comprennent un moyen de vérification de la notification de mise à jour et un moyen pour contrôler l'émission d'une requête de création d'un canal de communication en fonction du résultat de la vérification. Par exemple, une fonction logicielle vérifie le contenu de la notification de mise à jour d'une liste blanche, s'il s'agit d'une inscription ou effacement d'une liste blanche, puis autorise ou interdit l'émission de la requête de création respectivement selon le résultat de la vérification. La vérification peut être l'identification d'un message véhiculant la notification ou l'identification d'un paramètre d'un message véhiculant la notification.

De plus, dans une variante du moyen de vérification, le contrôle de l'émission est une fonction de type temporisation, apte à déclencher l'émission d'une requête de création d'un canal de communication immédiatement après la réception de la notification d'inscription ou après une temporisation programmée.

Le contrôle de l'émission de la requête de création a également pour effet technique de réduire le trafic d'information inutile. Il est prévu que l'information de la notification puisse être mémorisée dans une mémoire non volatile du premier et du deuxième composant hôte H1, H2 afin de contrôler l'émission de la requête de création du canal de communication.

La figure 3 représente un mode de réalisation du procédé d'administration d'un canal de communication selon l'invention, en particulier entre le premier et le deuxième composant hôte H1, H2. Le procédé est mis en œuvre par l'une quelconque des variantes du dispositif mobile NFC TR décrit précédemment. Le procédé d'administration selon l'invention est configuré pour être conforme à la spécification technique ETSI TS 102 622.

Dans une situation initiale, la liste blanche WL1 est vide et la liste blanche WL2 est vide. Par conséquent, le premier composant hôte H1 n'autorise pas le deuxième composant hôte H2 à créer un canal de communication en sa destination, et vice versa. Il est néanmoins envisageable sans sortir du cadre de l'invention que la liste blanche WL1 et la liste blanche WL2 comprennent des identifiants d'hôtes déjà mémorisés avant une phase d'initialisation du contrôleur d'hôtes HC.

A une étape E21, le deuxième composant hôte H2 émet une requête de création d'un canal de communication vers le contrôleur d'hôtes HC afin qu'il attribue un identifiant de canal et qu'il autorise la création d'un canal ayant pour origine le deuxième composant hôte H2 à destination du premier composant hôte H1.

A une étape E22, le contrôleur d'hôtes HC rejette la requête de création car la liste blanche WL1 du premier composant hôte H1 ne contient pas l'identifiant du deuxième composant hôte H2.

Dans une variante du procédé, il peut être prévu que le deuxième composant hôte H2 empêche l'émission d'une nouvelle requête de création de canal vers le composant hôte H1 après réception de la notification de rejet E22 tant qu'il ne reçoit pas une notification, en provenance du contrôleur d'hôtes HC, de son inscription dans la liste blanche WL1. Le contrôle de l'émission évite ainsi le trafic de données inutile.

Toutefois, dans une autre variante, le deuxième composant hôte H2 peut continuer à émettre des requêtes de création d'un canal sans contrôle spécifique.

Dans cette variante du procédé, à la suite de la réception de la notification de rejet E22, le deuxième composant hôte H2 n'émet plus de requête de création de canal de communication avec le premier composant hôte H1.

A une étape E23, le premier composant hôte H1 exécute une mise à jour du droit du deuxième composant H2 dans la première liste blanche WL1, dans ce cas-ci le deuxième composant hôte H2 est inscrit dans la liste blanche WL1. Un message d'inscription contenant l'identifiant du composant hôte H2 est transmise au contrôleur d'hôtes HC, par exemple un message d'écriture dans un registre de type ANY_SET_PARAMETER (WL1,H2ID) conforme à la dite spécification technique de l'ETSI mentionnée ci-avant. La liste blanche WL1 contient alors l'identifiant H2ID du composant hôte H2. Le contrôleur d'hôtes HC envoie alors, à l'étape E24, un message d'acquittement de la prise en compte de l'inscription du composant hôte H2 dans la liste blanche WL1 du composant hôte 1.

Ensuite, le procédé d'administration, selon l'invention, prévoit une étape E25 de notification de la mise à jour E23 au deuxième composant hôte H2 par le contrôleur d'hôtes HC. La notification est un message de type événement (cas représenté en figure 3) ou dans une autre variante un message de type commande requérant, alors, une réponse/acquittement de la part du deuxième composant hôte H2. La notification E25 sera envoyée au composant hôte H2 en cas de mise à jour réussie, avec l'identifiant H2ID du composant hôte H2, de la liste blanche WL1, par le contrôleur d'hôtes HC, suite à la demande de mise à jour E23 par le composant hôte H1. La notification E25 est configurée pour que le format du message soit conforme à la spécification technique ETSI TS 102 622.

Dans la variante dans laquelle la notification E25 est un message de type événement, la notification comprend au moins un premier paramètre contenant et codant le type d'action qui a été effectué par le composant hôte H1 sur sa liste blanche WL1, par exemple, inscription ou effacement de l'identifiant H2ID du composant hôte H2 et au moins un second paramètre contenant et codant l'identifiant H1ID du premier composant hôte H1 qui a mis à jour sa liste blanche WL1. Un exemple de cette notification, nullement limitatif, est un message de type événement EVT_NOTIF_WHITELIST_UPDATED[Action ;Host ID].

Dans une autre variante, la notification E25 de mise à jour de la liste blanche peut-être représentée par deux événements distincts, l'un pour les notifications d'inscription et l'autre pour les notifications d'effacement, avec chacun d'eux, au moins un paramètre codant et correspondant à l'identifiant de l'hôte ayant mis à jour sa liste blanche. Un exemple de cette notification, nullement limitatif, est un message de type événement EVT_NOTIF_HOST_ADDED_IN_WHITELIST[Host ID] pour les notifications d'inscription et un message de type événement EVT_NOTIF_HOST_DELETED_IN_WHITELIST[Host ID] pour les notification d'effacement.

Dans une autre variante dans laquelle la notification E25 est un message de type commande, la notification E25 comprend au moins un premier paramètre contenant et codant le type d'action qui a été effectué par le composant hôte H1 sur sa liste blanche WL1, par exemple, action de type inscription ou de type effacement de l'identifiant H2ID du composant hôte H2, dans ce cas-ci une inscription et au moins un second paramètre contenant et codant l'identifiant H1ID du premier composant hôte ayant mis à jour sa liste blanche WL1. Un exemple de cette notification, nullement limitatif, est un message de type commande CMD_NOTIF_WHITELIST_UPDATED[Action ;Host ID].

Dans une autre variante, la notification E25 de mise à jour de la liste blanche peut-être représentée par deux commandes distinctes, l'une pour les notifications d'inscriptions et l'autre pour les notifications d'effacements, avec chacune d'elle, un paramètre codant et correspondant à l'identifiant de l'hôte ayant mis à jour sa liste blanche. Un exemple de cette notification, nullement limitatif, est un message de type commande CMD_NOTIF_HOST_ADDED_IN_WHITELIST[Host ID] pour les notifications d'inscription et un message de type commande CMD_NOTIF_HOST_DELETED_IN_WHITELIST[Host ID] pour les notification d'effacement.

On notera que lorsque la notification E25 est effectuée en utilisant un message de type commande, le composant hôte notifié envoie, en retour, un message de type réponse au contrôleur d'hôtes HC pour lui retourner le résultat de la réception et de l'exécution de la notification E25 reçue précédemment en provenance du contrôleur d'hôtes HC. Le format du message de type réponse retourné par le composant hôte notifié est configuré pour être conforme au format des messages de la dite spécification technique de l'ETSI mentionnée ci-avant.

Dans une variante du procédé, il est prévu qu'il comprenne également une étape de vérification de la notification E25 par le deuxième composant hôte H2 et une étape de contrôle de l'émission d'une requête de création E26 du canal de communication P21 par le deuxième composant hôte H2 en fonction du résultat de la vérification. Ainsi, dans cette situation le deuxième composant hôte H2, après vérification de l'inscription, autorise et/ou déclenche l'émission d'une requête de création du canal de communication P21 à destination du premier composant hôte H1. Dans une autre variante, l'émission d'une requête de création n'est pas sous contrôle du deuxième composant H2.

Ainsi, à une étape E26, le procédé comprend ensuite la requête de création du canal émise par le deuxième composant hôte H2 à destination du contrôleur d'hôtes HC. Sur réception de la requête, le contrôleur d'hôtes HC vérifie que la liste blanche WL1 du premier composant hôte H1 contient l'identifiant H2ID du deuxième composant hôte H2 et assigne alors un identifiant de canal disponible à la requête de création de canal de communication. A une étape E27, le contrôleur d'hôtes HC notifie le premier composant hôte H1 de la requête de création de canal de communication de la part du deuxième composant hôte H2, ainsi que de l'identifiant de canal de communication choisi. Le premier composant hôte H1 retourne, alors, à une étape E28, au contrôleur d'hôtes HC, une confirmation d'acceptation de création du canal de communication avec l'identifiant de canal proposé. A une étape E29, le contrôleur d'hôtes HC notifie le deuxième composant hôte H2 de la création du canal de communication P21 avec le premier composant hôte H1 ainsi que de l'identifiant qui lui a été attribué. La phase de création du canal de communication P21 est conforme à la dite spécification technique de l'ETSI mentionnée ci-avant.

Le procédé d'administration d'un canal de communication selon l'invention s'applique également à une mise à jour d'effacement d'un identifiant d'un composant hôte dans la liste blanche d'un autre composant hôte. Conformément à l'invention, il est donc également prévu une étape de notification de la mise à jour de la liste blanche lors de l'effacement. Par conséquent, le composant hôte n'est plus autorisé à créer un canal de communication. Nous décrirons le déroulement du procédé d'administration pour la situation d'effacement, en conservant les références H1 et H2 pour le premier et deuxième composant hôte respectivement, lorsque le premier composant hôte H1 efface de sa liste blanche le deuxième composant hôte H2.

Selon un premier mode d'effacement, le procédé d'administration prévoit une étape de suppression du canal de communication P21 à l'initiative du premier composant hôte H1, entre le premier composant hôte H1 et le deuxième composant hôte H2 conformément à la dite spécification technique de l'ETSI mentionnée ci-avant. Il s'ensuit une étape de notification de suppression du canal de communication P21 envoyée au deuxième composant hôte H2, toujours, conformément à la dite spécification technique de l'ETSI.

Le procédé d'administration prévoit ensuite une étape d'effacement de l'identifiant du deuxième composant hôte H2 dans la liste blanche WL1 du premier composant hôte H1, toujours conformément à la dite spécification technique de l'ETSI mentionnée ci-avant.

Le procédé d'administration comprend ensuite, et selon l'invention, la notification de la mise à jour, cette fois d'effacement, de la liste blanche WL1, au deuxième composant hôte H2 par le contrôleur d'hôtes HC. La notification de mise à jour (d'effacement) est émise lorsque la mise à jour de la liste blanche WL1 est réussie, par exemple conditionnée à un acquittement émis par le contrôleur d'hôtes HC.

Dans une variante du premier mode d'effacement, le procédé comprend également une étape de vérification de la notification par le deuxième composant hôte H2 et une étape de contrôle de l'émission d'une requête de création du canal de communication par le deuxième composant hôte en fonction du résultat de la vérification. Dans cette situation, à la suite de la notification d'effacement le composant hôte H2 s'interdit d'émettre une requête de création d'un canal de communication à destination du premier composant hôte H1. Le procédé permet ainsi de réduire le trafic de données inutile.

Dans une autre variante, l'émission d'une requête de création n'est pas sous contrôle, quitte à ce qu'elle soit refusée par le contrôleur d'hôtes HC.

Selon un deuxième mode d'effacement, le procédé d'administration comprend une étape d'effacement de l'identifiant du deuxième composant hôte H2 dans la liste blanche WL1, puis une étape de notification à la fois du composant hôte H2 et du composant hôte H1 (et de tous les autres composants hôtes le cas échéant), par le contrôleur d'hôtes HC au moyen d'un message de type « ADM_NOTIFY_ALL_PIPE_CLEARED » ou de type « ADM_NOTIFY_PIPE_DELETED » conformément à la dite spécification technique de l'ETSI mentionnée ci-avant.

Ensuite, le procédé comprend l'étape de notification, par le contrôleur d'hôtes HC, de la mise à jour (effacement) de la liste blanche WL1 à destination du deuxième composant hôte H2. Comme pour le premier mode, le procédé comprend dans une variante du deuxième mode d'effacement, une étape de vérification de la notification par le deuxième composant hôte H2 et une étape de contrôle de l'émission d'une requête de création d'un canal de communication à destination du premier composant hôte H1. Dans une autre variante, le procédé ne prévoit pas la vérification, ni le contrôle de l'émission de la requête de création.

Selon un troisième mode d'effacement, le procédé d'administration comprend une étape d'effacement de l'identifiant du deuxième composant hôte H2 dans la liste blanche WL1, puis une étape de notification du composant hôte H2 de la suppression de son identifiant dans la liste blanche WL1 du composant hôte H1, puis une étape de requête de suppression du canal de communication par le composant hôte H2, la dite requête étant envoyée au contrôleur d'hôte HC et la suppression du canal de communication est exécutée par le contrôleur d'hôtes HC.

Selon un quatrième mode d'effacement, le procédé d'administration comprend une étape d'effacement de l'identifiant du composant hôte H2 dans la liste blanche WL1 du composant hôte H1, puis une étape de notification, par le contrôleur d'hôtes HC, du composant hôte H2 de la suppression de son identifiant dans la liste blanche WL1 du composant hôte H1, puis une étape de suppression du canal de communication initiée par le contrôleur d'hôtes HC.

Selon un cinquième mode d'effacement, le procédé d'administration comprend une étape d'effacement de l'identifiant du deuxième composant hôte H2 dans la liste blanche WL1 du composant hôte H1, puis une étape de notification du composant hôte H2, par le contrôleur d'hôtes HC, de la suppression de son identifiant dans la liste blanche WL1 du composant hôte H1. La spécificité de ce mode d'effacement réside dans le fait que le canal de communication préalablement établi entre le composant hôte H2 et le composant hôte H1 est maintenu actif. Le composant hôte H1 ne peut plus être sollicité par le composant hôte H2 concernant de nouvelles et futures requêtes de création de canal de communication et ceci tant que le composant hôte H2 ne sera pas de nouveau inscrit dans la liste blanche WL1 du composant hôte H1. Cependant, les opérations de service en cours d'exécution via le canal de communication précédemment créé sont maintenues opérationnelles tant que le canal de communication reste établi.

On notera que le procédé d'administration a été décrit plus spécifiquement dans une situation de mise à jour de la liste blanche WL1 du premier composant hôte H1 (de type SIM, eSIM ou eSE), toutefois le procédé s'applique pour tout type de composant hôte du dispositif mobile TR et pour tous les composants hôtes (deux composants hôtes ou plus). La notification de mise à jour d'inscription ou d'effacement d'une liste blanche est envoyée à un ou plusieurs composants hôtes si la mise à jour concerne un ou plusieurs composants hôtes.

Dans une situation initiale différente, au moins une des listes blanches n'est pas vide lors de la phase d'initialisation du réseau d'hôtes. Par exemple, durant une phase d'initialisation du réseau d'hôtes, les composants hôtes s'enregistrent auprès du contrôleur d'hôtes HC afin de constituer le réseau de composants hôtes dans lequel ces derniers sont enregistrés sous un numéro d'identifiant. Lors de son enregistrement auprès du contrôleur d'hôtes, une des étapes consiste pour chacun des composants hôtes à lui fournir sa liste blanche. Une fois la liste blanche reçue par le contrôleur d'hôtes en provenance du composant hôte en question et si elle contient des identifiants de composants hôtes, le contrôleur d'hôtes notifie les différents hôtes déjà enregistrés auprès du contrôleur d'hôtes et répertoriés dans la liste blanche reçue. Les composants hôtes répertoriés dans la liste blanche reçue mais qui ne sont pas encore enregistrés auprès du contrôleur d'hôtes HC, seront notifiés par le contrôleur d'hôtes HC une fois qu'ils se seront enregistrés auprès de ce dernier.

Par ailleurs, on ajoutera que des étapes de vérification de la notification de la mise à jour par le deuxième composant hôte H2 et de contrôle de l'émission d'une requête de création du canal de communication par le deuxième composant hôte H2 en fonction du résultat de la vérification peuvent être exécutées pour chacun des modes d'effacement du procédé d'administration décrits précédemment.

On ajoutera de plus, que la notification de mise à jour d'une liste blanche peut être un message de type événement ou commande tel que décrit dans la figure 3 pour tous les modes d'effacement du procédé d'administration.

## Revendications

1. Procédé d'administration d'un canal de communication (P21) à destination d'un premier composant hôte (H1) dans un dispositif mobile NFC (TR) comprenant également un contrôleur d'hôtes (HC) pour administrer au moins une première liste blanche (WL1) destinée à identifier au moins un deuxième composant hôte (H2) ayant un droit de création du canal de communication (P21) à destination du premier composant hôte H1, **caractérisé en ce qu'**il comprend les étapes successives suivantes :
- la mise à jour (E23) du droit du deuxième composant (H2) dans la première liste blanche (WL1) par le premier composant hôte (H1),
- la notification (E25) de la mise à jour (E23) au deuxième composant hôte (H2) par le contrôleur d'hôtes (HC).

2. Procédé selon la revendication 1, **caractérisé en ce qu'**il comprend également une étape de vérification de la notification (E25) par le deuxième composant hôte (H2) et une étape de contrôle de l'émission d'une requête de création (E26) du canal de communication (P21) par le deuxième composant hôte (H2) en fonction du résultat de la vérification.

3. Procédé selon la revendication 1 ou 2, **caractérisé en ce que** la mise à jour (E23) est une inscription d'un identifiant (H2ID) du deuxième composant hôte (H2) dans la première liste blanche (WL1) et **en ce qu'**il comprend également une étape de requête de création (E26) du canal de communication (P21) par le deuxième composant hôte (H2) à la suite de l'étape de notification (E25).

4. Procédé selon la revendication 1 ou 2, **caractérisé en ce que** la mise à jour (E23) est un effacement d'un identifiant (H2ID) du deuxième composant hôte (H2) dans la première liste blanche (WL1) et **en ce qu'**il comprend également une étape de requête de suppression du canal de communication (P21) par le deuxième composant hôte (H2) ou par le contrôleur d'hôtes (HC) à la suite de l'étape de notification (E25).

5. Procédé selon l'une quelconque des revendications 1 à 4, **caractérisé en ce que** la notification (E25) est un message comprenant au moins un premier paramètre contenant l'identifiant (H1ID) du premier composant hôte (H1).

6. Procédé selon la revendication 5, **caractérisé en ce que** la notification (E25) est un message comprenant également au moins un deuxième paramètre indiquant une action d'inscription ou d'effacement.

7. Procédé selon l'une quelconques des revendications 5 à 6, **caractérisé en ce que** la notification (E25) est configurée pour que le format du message soit conforme à la spécification technique ETSI TS 102 622.

8. Dispositif mobile NFC (TR) comprenant au moins un premier et un deuxième composant hôte (H1, H2) et un contrôleur d'hôtes (HC) pour administrer au moins une première liste blanche (WL1) destinée à identifier au moins le deuxième composant hôte (H2) ayant un droit de création d'un canal de communication (P21) à destination du premier composant hôte (H1), **caractérisé en ce que** le contrôleur d'hôtes (HC) comprend également un moyen pour émettre une notification (E25) de mise à jour (E23) du droit de création du canal de communication (P21) dans la première liste blanche (WL1) vers au moins le deuxième composant hôte (H2).

9. Dispositif selon la revendication 8, **caractérisé en ce que** le deuxième composant hôte (H2) comprend un moyen de vérification de la notification (E25) et un moyen pour contrôler l'émission d'une requête de création du canal de communication (P21) en fonction du résultat de la vérification.

10. Dispositif selon l'une quelconque des revendications 8 à 9, **caractérisé en ce que** le premier composant hôte (H1) et le deuxième composant hôte (H2) sont chacun un des composants choisis parmi la liste des composants de type circuits intégrés suivants : eSE, UICC, eUICC, élément sécurisé, SIM amovible, processeur du dispositif mobile, carte mémoire SD.

11. Dispositif selon l'une quelconque des revendications 8 à 10, **caractérisé en ce que** le contrôleur d'hôtes (HC) est hébergé dans un circuit intégré NFC (CLF).

12. Dispositif selon l'une quelconque des revendications 8 à 11, **caractérisé en ce que** le contrôleur d'hôtes (HC) et le moyen pour émettre la notification (E25) de mise à jour sont configurés pour que le format du message de la notification (E25) de la mise à jour soit conforme à la spécification technique ETSI TS 102 622.

13. Programme d'ordinateur comprenant des moyens pour l'exécution des étapes du procédé selon l'une quelconque des revendications 1 à 7 lorsque le dit programme est exécuté sur un dispositif mobile NFC.

## Patentansprüche

1. Verfahren zur Verwaltung eines Kommunikationskanals (P21) zu einer ersten Host-Komponente (H1) hin in einer mobilen NFC-Vorrichtung (TR), die auch eine Host-Steuerung (HC) zum Verwalten wenigstens einer ersten weißen Liste (WL1) aufweist, die dazu bestimmt ist, wenigstens eine zweite Host-Komponente (H2) zu identifizieren, die berechtigt ist, den Kommunikationskanal (P21) zur ersten Host-Komponente hin zu erschaffen, **dadurch gekennzeichnet, daß** es die nachstehenden aufeinanderfolgenden Schritte aufweist:
- Aktualisieren (E23) des Rechts der zweiten Komponente (H2) in der ersten weißen Liste (WL1) durch die erste Host-Komponente (H1),
- Mitteilung (E25) der Aktualisierung (E23) an die zweite Host-Komponente (H2) durch die Host-Steuerung (HC).

2. Verfahren gemäß Anspruch 1, **dadurch gekennzeichnet, daß** es auch einen Schritt der Überprüfung der Mitteilung (E25) durch die zweite Host-Komponente (H2) und einen Schritt des Steuerns des Aussendens einer Anfrage (E26) zum Erschaffen des Kommunikationskanals (P21) durch die zweite Host-Komponente (H2) in Abhängigkeit vom Ergebnis der Überprüfung aufweist.

3. Verfahren gemäß Anspruch 1 oder 2, **dadurch gekennzeichnet, daß** die Aktualisierung (E23) eine Eintragung einer Kennung (H2ID) der zweiten Host-Komponente (H2) in die erste weiße Liste (WL1) ist, und daß es auch einen Schritt einer Anfrage (E26) zum Erschaffen des Kommunikationskanals (P21) durch die zweite Host-Komponente (H2) nach dem Schritt der Mitteilung (E25) aufweist.

4. Verfahren gemäß Anspruch 1 oder 2, **dadurch gekennzeichnet, daß** die Aktualisierung (E23) ein Löschen einer Kennung (H2ID) der zweiten Host-Komponente (HZ) in der ersten weißen Liste (WL1) ist und daß es auch einen Schritt einer Anfrage zum Löschen des Kommunikationskanals (P21) durch die zweite Host-Komponente (H2) oder durch die Host-Steuerung (HC) nach dem Schritt der Mitteilung (E25) aufweist.

5. Verfahren gemäß einem der Ansprüche 1 bis 4, **dadurch gekennzeichnet, daß** die Mitteilung (E25) eine Nachricht ist, die wenigstens einen ersten Parameter enthält, der die Kennung (H1ID) der ersten Host-Komponente (H1) aufweist.

6. Verfahren gemäß Anspruch 5, **dadurch gekennzeichnet, daß** die Mitteilung (E25) eine Nachricht ist, die auch wenigstens einen zweiten Parameter aufweist, der eine Eintragungs- oder Löschungshandlung anzeigt.

7. Verfahren gemäß einem der Ansprüche 5 bis 6, **dadurch gekennzeichnet, daß** die Mitteilung (E25) so ausgelegt ist, daß das Format der Nachricht der technischen Vorschrift ETSI TS 102 622 entspricht.

8. Mobile NFC-Vorrichtung (TR), die wenigstens eine erste und eine zweite Host-Komponente (H1, H2) und eine Host-Steuerung (HC) zum Verwalten wenigstens einer ersten weißen Liste (WL1) aufweist, die dazu bestimmt ist, wenigstens die zweite Host-Komponente (H2) zu identifizieren, die berechtigt ist, einen Kommunikationskanal (P21) zur ersten Host-Komponente (H1) hin zu erschaffen, **dadurch gekennzeichnet, daß** die Host-Steuerung (HC) auch ein Mittel zum Aussenden einer Mitteilung (E25) über die Aktualisierung (E23) des Rechts des Erschaffens des Kommunikationskanals (P21) in der ersten weißen Liste (WL1) wenigstens zur zweiten Host-Komponente (H2) hin aufweist.

9. Vorrichtung gemäß Anspruch 8, **dadurch gekennzeichnet, daß** die zweite Host-Komponente (H2) ein Mittel zur Überprüfung der Mitteilung (E25) und ein Mittel zum Steuern des Aussendens einer Anfrage zum Erschaffen des Kommunikationskanals (P21) in Abhängigkeit vom Ergebnis der Überprüfung aufweist.

10. Vorrichtung gemäß einem der Ansprüche 8 bis 9, **dadurch gekennzeichnet, daß** die erste Host-Komponente (H1) und die zweite Host-Komponente (H2) jeweils eine der Komponenten sind, die aus der Liste der folgenden Komponenten vom Typ der integrierten Schaltkreise ausgewählt sind: eSE, UICC, eUICC, gesichertes Element, entfernbare SIM, Prozessor der mobilen Vorrichtung, SD-Speicherkarte.

11. Vorrichtung gemäß einem der Ansprüche 8 bis 10, **dadurch gekennzeichnet, daß** die Host-Steuerung (HC) in einer integrierten NFC-Schaltung (CLF) enthalten ist.

12. Vorrichtung gemäß einem der Ansprüche 8 bis 11, **dadurch gekennzeichnet, daß** die Host-Steuerung (HC) und das Mittel zum Aussenden der Mitteilung (E25) über die Aktualisierung so ausgelegt sind, daß das Format der Nachricht der Mitteilung (E25) über die Aktualisierung der technischen Vorschrift ETSI TS 102 622 entspricht.

13. Computerprogramm, das Mittel zum Ausführen der Schritte des Verfahrens gemäß einem der Ansprüche 1 bis 7 aufweist, wenn das Programm auf einer mobilen NFC-Vorrichtung ausgeführt wird.

## Claims

1. A method for administering a communication channel (P21) to a first host component (H1) in an NFC mobile device (TR) also comprising a host controller (HC) for administering at least one first white list (WL1) intended to identify at least one second host component (H2) having a right to create the communication channel (P21) to the first host component H1, **characterized in that** it comprises the following successive steps:
- updating (E23) of the right of the second component (H2) in the first white list (WL1) by the first host component (H1),
- notification (E25) of the update (E23) to the second host component (H2) by the host controller (HC).

2. The method as claimed in claim 1, **characterized in that** it also comprises a step of verification of the notification (E25) by the second host component (H2) and a step of controlling of the transmission of a communication channel (P21) creation request (E26) by the second host component (H2) depending on the result of the verification.

3. The method as claimed in claim 1 or 2, **characterized in that** the update (E23) is a registration of an identifier (H2ID) of the second host component (H2) in the first white list (WL1), and **in that** it also comprises a step of requesting creation (E26) of the communication channel (P21) by the second host component (H2) following the notification step (E25).

4. The method as claimed in claim 1 or 2, **characterized in that** the update (E23) is an erasure of an identifier (H2ID) of the second host component (H2) from the first white list (WL1), and **in that** it also comprises a step of requesting deletion of the communication channel (P21) by the second host component (H2) or by the host controller (HC) following the notification step (E25).

5. The method as claimed in any one of claims 1 to 4, **characterized in that** the notification (E25) is a message comprising at least one first parameter containing the identifier (H1ID) of the first host component (H1).

6. The method as claimed in claim 5, **characterized in that** the notification (E25) is a message also comprising at least one second parameter indicating a registration or erasure action.

7. The method as claimed in either one of claims 5 and 6, **characterized in that** the notification (E25) is configured so that the format of the message is in conformity with the technical specification ETSI TS 102 622.

8. An NFC mobile device (TR) comprising at least one first and one second host component (H1, H2) and a host controller (HC) for administering at least one first white list (WL1) intended to identify at least the second host component (H2) having a right to create a communication channel (P21) to the first host component (H1), **characterized in that** the host controller (HC) also comprises a means for transmitting a notification (E25) of updating (E23) of the right to create the communication channel (P21) in the first white list (WL1) to at least the second host component (H2).

9. The device as claimed in claim 8, **characterized in that** the second host component (H2) comprises a means for verifying the notification (E25) and a means for controlling the transmission of a communication channel (P21) creation request depending on the result of the verification.

10. The device as claimed in either one of claims 8 and 9, **characterized in that** the first host component (H1) and the second host component (H2) are each one of the components chosen from the list of following integrated circuit components: eSE, UICC, eUICC, secure element, removable SIM, processor of the mobile device, SD memory card.

11. The device as claimed in any one of claims 8 to 10, **characterized in that** the host controller (HC) is hosted in an NFC integrated circuit (CLF).

12. The device as claimed in any one of claims 8 to 11, **characterized in that** the host controller (HC) and the means for transmitting the update notification (E25) are configured so that the format of the message of the update notification (E25) is in conformity with the technical specification ETSI TS 102 622.

13. A computer program comprising means for executing the steps of the method according to any one of claims 1 to 7 when said program is executed on an NFC mobile device.
